# FASCICULE DE BREVET EUROPEEN

(11) **EP 1 834 857 B1**
(45) Date de publication et mention de la délivrance du brevet: **01.11.2017**
(21) Numéro de dépôt: 07290263.8
(22) Date de dépôt: 02.03.2007
(51) Int. Cl.: B61L 19/06, B61L 21/04, G06F 11/00

(54) **Dispositif de commande sécurisé à diversification pour un système**
Sichere Steuervorrichtung mit Diversifizierung eines Systems
Secure command device for diversification of a system

(30) Priorité: 17.03.2006 FR 0602390
(43) Date de publication de la demande: 19.09.2007
(73) Titulaire: ALSTOM Transport Technologies, 93400 Saint-Ouen (FR)
(72) Inventeur: Bougault, Cyrille, 78280 Guyancourt (FR)
(74) Mandataire: Lavoix

(56) Documents cités:
- EP-A1- 1 038 752
- EP-A1- 1 197 418
- EP-A2- 1 085 415
- EP-A2- 1 316 884
- WO-A-03/070537
- DE-U1-202005 016 151
- US-A1- 2002 116 662

## Description

L'invention concerne un dispositif de commande sécurisée à diversification selon le préambule de la revendication 1.

Un tel dispositif est connu du document US2002/116662 A1.

Un système ferroviaire comporte un système d'aiguillage couplé à un système de passage à niveau et un dispositif d'annonce de fermeture de la barrière du passage.

Pour des raisons de sécurité, il est connu de diversifier une chaîne de commande d'un système ferroviaire sous forme de branches de traitement ayant des configurations de circuits de calcul différentes. A partir de mêmes données d'entrée, chaque branche de traitement exécute les mêmes applications ou algorithmes applicatifs mais suivant des modes de calcul différents.

Dans le cas où chaque branche fonctionne correctement, des commandes identiques sont issues en sortie de chaque branche.

Dans le cas d'une défaillance de la circuiterie de l'une des branches, des commandes différentes sont fournies.

Dans le cas de défaillances simultanées de plusieurs branches, des commandes différentes sont également fournies du fait de l'absence de corrélation de pannes entre les branches ayant des configurations de circuits de calcul différentes. Ce dispositif classique est particulièrement avantageux lorsque des algorithmes complexes sont mis en oeuvre.

Une mise en oeuvre simple sur le plan du matériel et bien connue de ce dispositif de commande sécurisée consiste à disposer sur chaque branche un processeur d'architecture identique.

Pour cette mise en oeuvre bien connue, chaque processeur exécute un jeu d'instructions ou programme objet différent issu d'un programme source différent, en fonction d'un langage de compilateur associé différent, chaque programme source différent émulant la même application définie par les mêmes entrées, les mêmes sorties et les mêmes algorithmes applicatifs.

Toutefois, cette mise en oeuvre simple sur le plan matériel demeure complexe sur le plan logiciel nécessitant de nombreux développements de composants logiciels proportionnés au nombre de langages ou compilateurs différents utilisés.

Le problème objectif posé par un tel dispositif classique de commande sécurisée à diversification est la complexité de développement des composantes logiciels utilisant plusieurs langages de compilation.

Le but de l'invention est donc de fournir un dispositif de commande sécurisée à diversification pour lequel le développement de ses composantes logicielles requiert des efforts réduits.

A cet effet, l'invention a pour objet un dispositif et un procédé de commande sécurisé à diversification conforme aux revendications.

L'invention sera mieux comprise à la lecture de la description qui va suivre, donnée uniquement à titre d'exemple et faite en se référant aux dessins annexés, sur lesquels :
- la figure 1 est une vue schématique en bloc d'un dispositif de commande sécurisée à diversification ;
- les figures 2A, 2B, 2C sont respectivement un schéma en bloc d'une première forme de réalisation des bases de données programme illustrées sur la figure 1 ;
- les figures 3A, 3B, 3C sont respectivement une illustration des séquences associées à chacune des bases de données programme des figures 2A, 2B,2C;
- la figure 4A est une vue schématique des entrées et sorties respectives associées à chacun des automates illustrés sur les figures 2A, 2B, 2C;
- les figures 4B et 4C sont respectivement des vues schématiques de la structure de données de vecteurs d'état associés respectivement à un registre d'état de début de séquence et à un registre d'état fin de séquence d'une mémoire de travail quelconque ;
- la figure 5 est un organigramme du procédé de commande mis en oeuvre par le dispositif de commande à diversification selon la première forme de réalisation des bases de données programme ; et
- les figures 6A, 6B, 6C, 6D, 6E sont une séquence d'une deuxième forme de réalisation de bases de données programme.

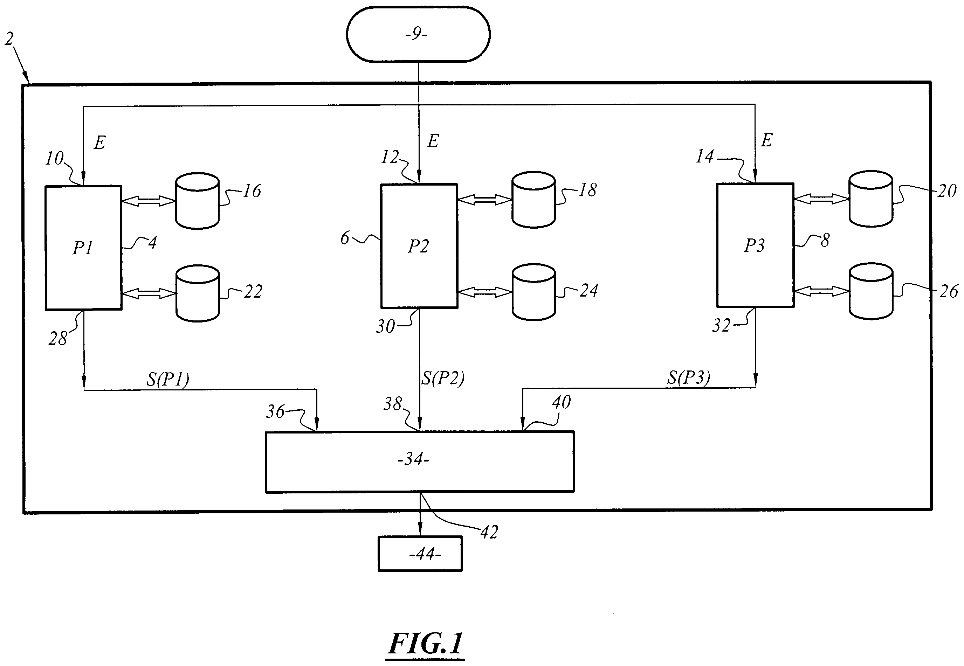

Le dispositif de commande sécurisé à diversification 2 représenté sur la figure 1 comprend trois chaînes de calcul ou traitement, chacune étant composée respectivement d'un premier processeur 4 ou P1, d'un deuxième processeur 6 ou P2 et d'un troisième processeur 8 ou P3.

Chaque processeur 4, 6, 8 reçoit par une entrée associée 10, 12, 14 des mêmes données d'entrée issues d'un système ferroviaire 9 prédéterminé.

Chaque processeur 4, 6, 8 est propre à exécuter respectivement un programme de calcul ou jeu d'instructions chargé à partir d'une base de données programme associée 16, 18, 20 à laquelle il est relié.

Chaque processeur 4, 6, 8 est apte à échanger des données de travail avec une base de données de travail associée 22, 24, 26.

Chaque processeur 4, 6, 8 est pourvu d'une sortie associée 28, 30, 32 apte à délivrer des données de sortie S(P1), S(P2), S(P3) après traitement.

Le dispositif de commande sécurisé 2 comprend également un organe de sélection de commande 34 comportant ici trois entrées 36, 38, 40. Chaque entrée 36, 38, 40 est apte à recevoir le signal de sortie (S(P1), S(P2), S(P3) issu de chaque processeur 4, 6, 8 ou (P1, P2, P3).

L'organe de sélection de la commande 34 comporte une sortie 42 reliée à un terminal 44 de réception de la commande.

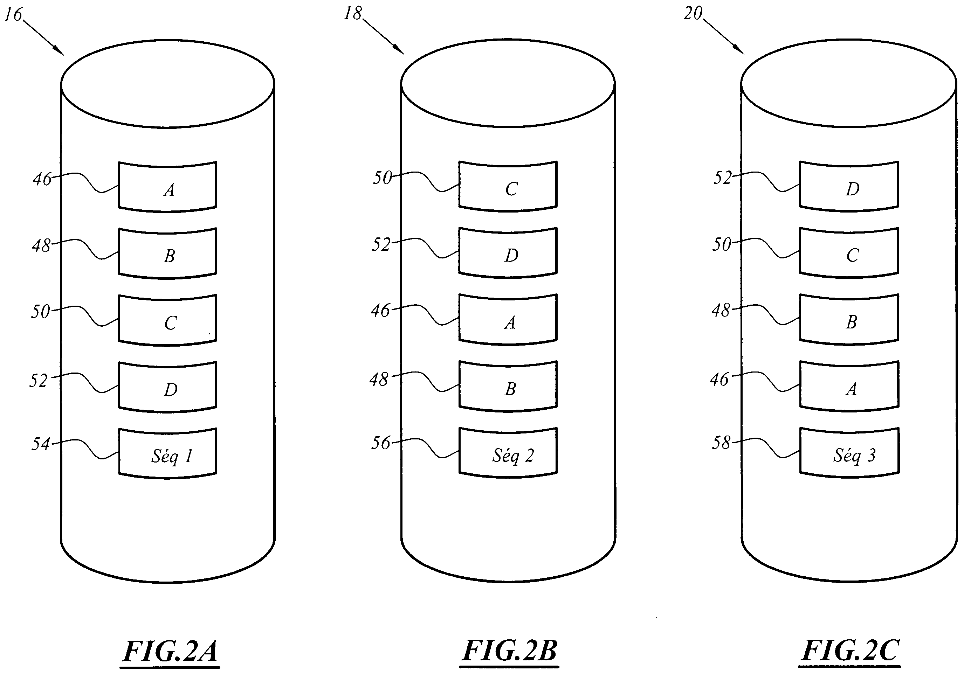

Le contenu structurel d'une première forme de réalisation de chaque base de données programme 16, 18, 20 associée à chaque processeur 4, 6, 8 est représenté respectivement sur les figures 2A, 2B, 2C.

La première base de données programme 16 associée au premier processeur P1 comprend une séquence d'automates 46, 48, 50, 52 ou A, B, C, D ordonnés selon une première séquence dans l'ordre A, B, C, D et un premier séquenceur 54 ou Seq1 pilotant le séquencement des automates suivant cet ordre.

La deuxième base de données programme 18 associée au deuxième processeur P2 comprend les mêmes automates ordonnés selon une deuxième séquence différente 50, 52, 46, 48 ou C, D, A, B et un deuxième séquenceur 56 ou Seq2 pilotant le séquencement des automates suivant cet ordre.

La troisième base de données programme 20 associée au troisième processeur P3 comprend les automates A, B, C, D rangés selon une troisième séquence encore différente D, C, B, A et un troisième séquenceur 58 ou Seq3 pilotant le séquencement des automates suivant cet ordre.

Les automates correspondant à une même application sont identiques dans chaque base de données programme au sens où ils sont générés à partir d'un même code source et d'un même compilateur.

Tous les automates de chaque base de données sont générés à partir du même compilateur.

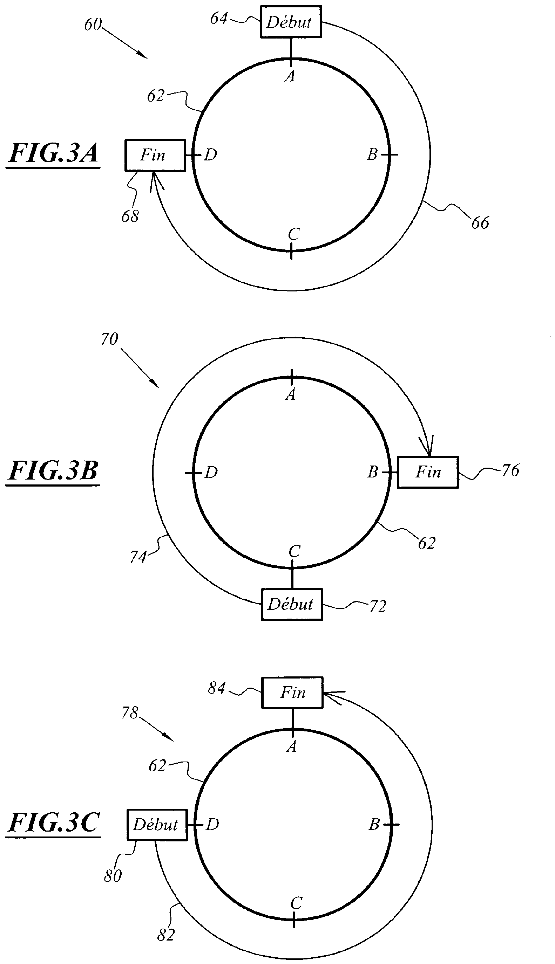

Les première, deuxième, troisième séquences mises en oeuvre par les séquenceurs Seq1, Seq2 et Seq3 sont décrites respectivement sur les figures 3A, 3B, 3C. Chaque séquence 60, 70, 78 formée à partir d'un même cycle 62 comporte un début de séquence 64, 72, 80, ici A sur la figure 3A, C sur la figure 3B, et D sur la figure 3C. Chaque séquence 60, 70, 78 est parcourue respectivement selon un sens 66, 76, 82, un sens horaire 66 sur la figure 3A, un sens horaire 74 sur la figure 3D et un sens anti-horaire 82 sur la figure 3C. A chaque séquence 60, 70, 78 correspond une fin de séquence 68, 76, 84 résultant du parcours depuis le début 64, 72, 80 de chaque séquence 60, 70, 78.

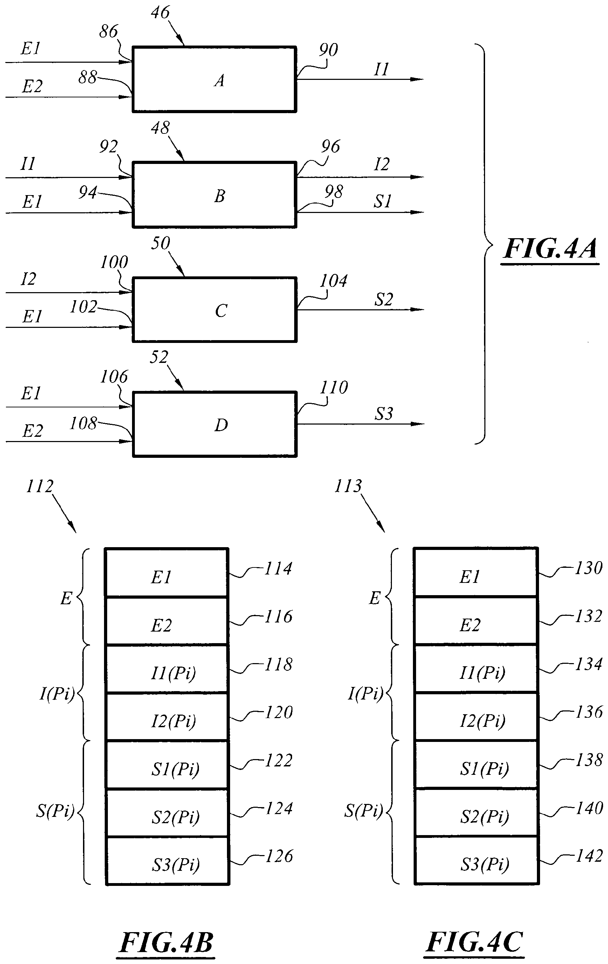

Sur la figure 4A est représenté l'ensemble des automates destiné à des applications modulaires. Ici, l'automate A sert à simuler un modèle d'itinéraire, l'automate B sert à simuler un modèle de passage à niveau, l'automate C simule un modèle d'annonce et l'automate D reproduit un modèle d'aiguillage.

L'automate A reçoit respectivement sur deux entrées 86, 88 deux signaux d'entrée E1, E2 du système ferroviaire et fournit en sortie 90 un premier signal interne I1.

L'automate B est pourvu de deux entrées 92, 94 recevant chacune le premier signal interne I1 et le premier signal d'entrée E1 du système ferroviaire. L'automate B est également pourvu de deux sorties 96, 98 aptes à délivrer un deuxième signal interne I2 et un premier signal de sortie externe S1.

L'automate C reçoit respectivement sur deux entrées 100, 102 le deuxième signal interne I2 et le premier signal d'entrée externe E1. L'automate C délivre un deuxième signal de sortie externe S2 sur une sortie 104.

L'automate D reçoit respectivement sur deux entrées 106, 108 le premier signal d'entrée externe E1 et le deuxième signal d'entrée externe E2. L'automate D délivre sur une sortie unique 110 un troisième signal de sortie externe S3.

Ici, le premier signal d'entrée externe E1 est une heure courante tandis que le deuxième signal d'entrée externe E2 est un indicateur de passage de balise de chemin de fer. La première variable interne I1 représente ici une heure de traversée prévue du passage à niveau et la deuxième variable interne I2 représente l'heure de commande calculée de l'annonce.

Le premier signal de sortie externe S1 est une commande d'abaissement des barrières de passage à niveau, le deuxième signal de sortie externe S2 est la commande de l'annonce de fermeture du passage à niveau tandis que le troisième signal sortie externe S3 est une commande d'aiguillage.

Chaque mémoire de travail 22, 24, 26 associé à un processeur (P1, P2, P3) comprend un registre d'état de début de séquence 112 et un registre d'état de fin de séquence 113 génériques par rapport aux processeurs (P1, P2, P3) et illustrés respectivement sur les figures 4B et 4C.

Chacun des registres représentés sur les figures 4B et 4C est représenté par un vecteur d'état correspondant. Le vecteur d'état du registre de début de séquence 112 sur la figure 4B comprend sept emplacements mémoire 114, 116, 118, 120, 122, 124, 126, et est subdivisé en trois zones de mémoire, une première zone 114, 116 pouvant mémoriser les deux entrées externes E1, E2, une deuxième zone I(Pi), 118, 120 pouvant mémoriser les deux variables internes I1(Pi), I2(Pi) et une troisième zone S(Pi), 122, 124, 126 pouvant mémoriser les données de sortie externe S1(Pi), S2(Pi) et S3(Pi).

Le registre d'état de fin de séquence 113 comprend une structure analogue 130, 132, 134, 136, 138, 140, 142 au vecteur d'état 114, 116, 118, 120, 122, 124, 126 du registre d'état du début de séquence 112.

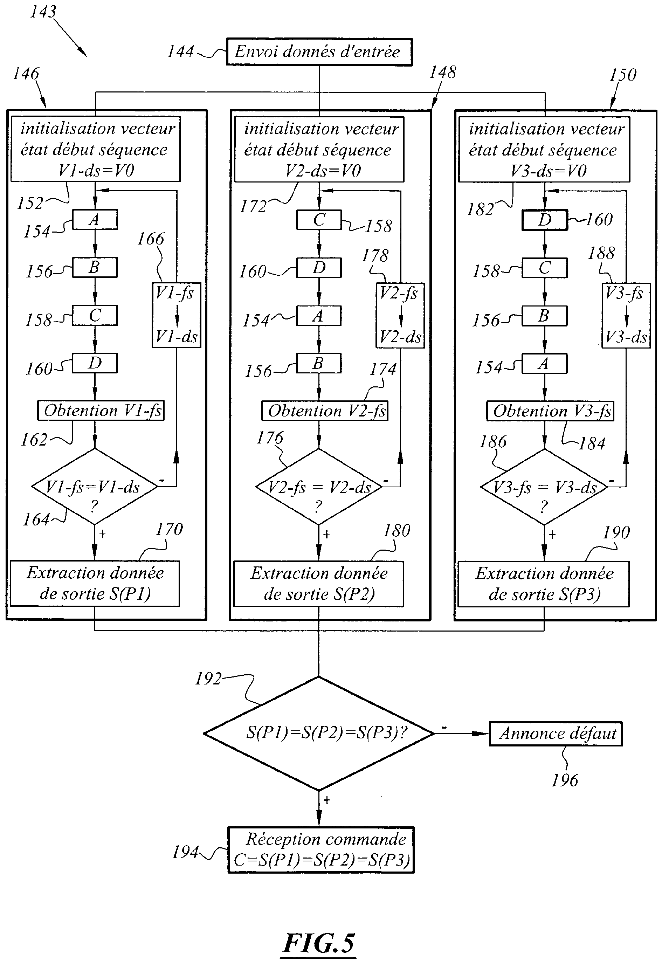

Le fonctionnement du dispositif de commande sécurisé à diversification est décrit par l'organigramme de la figure 5, lequel est mis en oeuvre par les processeurs P1, P2 et P3.

Dans une première étape 144 le système ferroviaire envoie de manière commune les mêmes données d'entrée E à chacun des processeurs P1, P2 et P3 pour effectuer les traitements respectifs 146, 148 et 150. Dans une première étape 152, le premier processeur P1 initialise le registre d'état de début de séquence 112 représenté par le vecteur d'état V1-ds sur la figure 5. Puis, il exécute le premier automate 154 ici A, puis le second 156 ici B, puis le troisième 158 ici C, puis le quatrième160 ici D selon la première séquence associée au premier processeur P1 et illustrée sur la figure 3A.

En fin de séquence, les données de sortie obtenues sur chaque automate A, B, C, D, forment en 162 le vecteur d'état V1-fs associé au registre d'état de fin de séquence 113.

Dans l'étape de test 164 qui suit, le vecteur d'état du registre d'état de début de séquence V1-ds est comparé avec le registre d'état de fin de séquence V1-fs.

Dans le cas où les vecteurs d'état V1-ds et V1-fs sont différents, l'exécution de la première séquence A, B, C, D est répétée, le registre de début de séquence 112 ayant été au préalable rafraîchi par le vecteur d'état V1-fs du registre d'état de fin de séquence 113. Dans le cas où les registres d'état présentent le même vecteur d'état V1-ds et V1-fs dans l'étape de test 164 les données de sortie sont ensuite extraites à l'étape 170.

Le traitement 148 du deuxième processeur P2 est analogue à celui du premier processeur P1 sauf en ce qui concerne l'ordre des automates. Ainsi en début de traitement est effectuée une tâche d'initialisation 172 du registre d'état de début de séquence ici V2-ds. Toutefois, l'exécution de la séquence est différente puisque c'est la deuxième séquence illustrée sur la figure 3B qui est suivie à savoir selon le déroulement C, D, A, B.

Un test de comparaison 176 des vecteurs d'état des registres de début de séquence V2-ds et de fin de séquence V2-fs est également effectué avec un rafraîchissement 178 du registre de début de séquence dans le cas où le test est négatif.

Lorsque le test est positif, alors les données de sortie S(P2) de traitement du deuxième processeur sont extraites à l'étape 180.

De même, le traitement 150 du troisième processeur P3 est analogue au traitement des premier et deuxième processeurs P1, P2 à l'ordre près.

Une étape d'initialisation 182 du registre d'état du début de séquence 112 est également effectuée. La séquence d'automates parcourue est parcourue selon la troisième séquence illustrée sur la figure 3C, à savoir la séquence D, C, B, A.

De même, les données de sortie S(P3) des automates sont fournies au registre d'état de fin de séquence à l'étape 184. Un test analogue 186 est effectué sur la comparaison des vecteurs d'état V3-ds et V3-fs du registre d'état de début de séquence 112 et du registre d'état de fin de séquence 113. L'exécution de la séquence est répétée jusqu'à ce que le test soit positif.

Dans le cas où le test est négatif, le registre d'état de fin de séquence rafraîchit 188 le registre de début de séquence 112. Lorsque le test est positif, les données de sortie S(P3) du troisième processeur P3 sont extraites 186 et envoyées à l'organe de sélection de la commande 34. Chaque sortie de chaque processeur S(P1), S(P2), S(P3) est envoyée à l'organe de sélection de commande 34. Dans l'étape de sélection de commande 192 les valeurs de sortie de chacun des processeurs sont comparées.

Dans le cas où les valeurs de sortie y sont toutes égales, la commande de sortie C est égale à l'une des valeurs de sortie S(P1), S(P2), S(P3) validée et transmise dans l'étape 194 au terminal de réception 44 de la commande du système ferroviaire.

Dans le cas où l'une de ces données est différente, alors dans une étape 196 une signalisation annonce un défaut du dispositif de commande sécurisée à diversification.

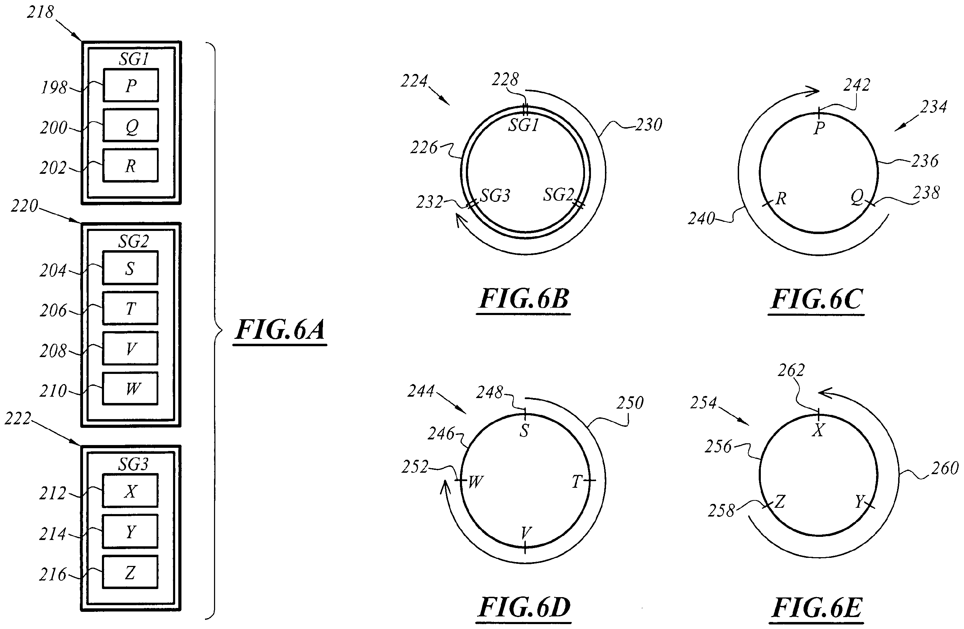

En variante, une séquence formée à partir d'un ensemble d'automates 198, 200, 202, 204, 206, 208, 210, 212, 214, 216 d'une deuxième forme de réalisation de base de données programme est décrite sur les figures 6A, 6B, 6C, 6D et 6E prises dans leur ensemble.

Sur la figure 6A ces automates sont répertoriés et dénommés P, Q, R, S, T, V, W, X, Y, Z.

L'ensemble d'automates 198, 200, 202, 204, 206, 208, 210, 212, 214, 216 est partitionné en trois sous-groupes 218, 220, 222 ou SG1, SG2, SG3 respectivement un premier sous-groupe 218 ou SG1 formé des automates P, Q, R, un deuxième sous-groupe 220 ou SG2 formé des automates S, T, V, W, et un troisième sous-groupe 222 ou SG3 formé des automates X, Y, Z.

Une séquence 224 de sous-groupes est décrite sur la figure 6B à partir d'un cycle de sous-groupes 226 formé par la séquence SG1, SG2, SG3, un début de séquence 228 ici SG1, un sens de parcours 230 ici horaire et une fin de séquence 242 de sous-groupe 232 ici en SG3.

Une séquence 240 du premier sous-groupe SG1 est décrite sur la figure 6C. La séquence du premier sous-groupe 240 est formée à partir d'un cycle 236 ici P, Q, R dont le début de séquence 238 est ici l'automate Q parcouru dans le sens 240, ici horaire, avec la fin de séquence 242 étant l'automate P.

Une séquence 244 du deuxième sous-groupe SG2 est décrite sur la figure 6D à partir d'un cycle 246 ici S, T, V, W, le début de cette séquence 248 étant ici l'automate S, le parcours du cycle 250 étant effectué dans le sens horaire et la fin de la séquence 252 étant déterminée par l'automate W.

Enfin, la séquence du troisième sous-groupe SG3 est formée à partir du cycle 256 ici X, Y, Z, le début de séquence 258 étant formé par l'automate Z, et le parcours du cycle 260 étant effectué dans un sens 260, ici anti-horaire, la fin de séquence 262 étant alors déterminée par l'automate X. La séquence d'automates ainsi obtenue est formée par la concaténation des séquences partielles 234, 244, 254 selon la séquence de sous-groupes SG1, SG2, SG3.

Ainsi, la séquence d'automate décrite par l'ensemble des figures est Q, R, P, S, T, V, W, Z, Y, X.

Ainsi, les jeux d'instructions différents, formés à partir d'un ordonnancement propre distinct des automates d'application modulaire permettent d'utiliser des chaînes d'activation de circuits différentes dans chacun des processeurs à architecture identique, une chaîne étant définie par rapport à l'architecture générique des processeurs.

Ainsi, les jeux d'instructions distincts obtenus satisfont en premier lieu les exigences de diversification posées par les contraintes de sécurité ferroviaire au dispositif de commande.

En outre, le procédé d'élaboration de ces jeux d'instructions distincts est simple à mettre en oeuvre puisqu'il permet de n'utiliser qu'une seule plateforme de développement logiciel.

En effet, le développement des modules d'application utilisant un seul compilateur est réduit, les modules d'application pouvant être réutilisés avantageusement d'une branche de traitement à une autre.

En variante, le dispositif de commande sécurisé décrit ci-dessus peut également être utilisé sans modification substantielle pour des systèmes de commandes de vols embarqués à bord d'avions ou engins spatiaux, ou encore pour des systèmes de protection ou d'arrêt d'installations nucléaires.

En variante, le dispositif de commande sécurisé décrit ci-dessus peut être utilisé à tous les domaines sécurisés.

## Revendications

1. Dispositif de commande sécurisé à diversification (2) d'un système comprenant :
- un ensemble d'au moins deux processeurs (4, 6, 8) d'élaboration de commandes destinées au système ferroviaire, agencés en parallèle pour recevoir sur une entrée respective (10, 12, 14) des données d'entrées identiques, chaque processeur (4, 6, 8) étant apte à recevoir des jeux d'instructions différents permettant de calculer et délivrer, en des sorties respectives (28, 30, 32), des données de sortie ( S(P1), S(P2), S(P3)) identiques en fonction des données d'entrées identiques,
- un organe de sélection de commande (34) pourvu d'au moins deux entrées (36, 38, 40), chaque entrée (36, 38, 40) étant connectée à la sortie (28, 30, 32) d'un processeur (4, 6, 8), et d'une sortie de commande (42) propre à délivrer un signal de commande choisi parmi les données de sorties issues des processeurs (4, 6, 8), en fonction d'un critère prédéterminé,
chaque jeu d'instructions associé à un processeur (4, 6, 8) permettant d'exécuter au moins deux automates d'application modulaire (46, 48, 50, 52), les automates d'applications modulaire (46, 48, 50, 52) étant identiques pour tous les jeux d'instructions, chaque jeu d'instructions (16, 18, 20) associé à un processeur (4, 6, 8) étant propre à former un séquenceur (54, 56, 58) d'activation successive des automates d'application modulaire (46, 48, 50, 52) selon une séquence associée (60, 70, 78), chaque séquenceur (54, 56, 58), de par sa séquence propre associée (60, 70, 78), étant distinct des autres séquenceurs (56, 58 ; 54, 58 ; 54, 56),
**caractérisé**
**en ce que** chaque automate d'application modulaire (46, 48, 50, 52) comprend des entrées d'automates et des sorties d'automates (90, 96, 98, 104, 110),
une entrée d'automate étant externe lorsqu'elle est propre à recevoir une donnée variable d'entrée (E1, E2) du dispositif de commande (2),
une sortie d'automate étant externe lorsqu'elle est propre à délivrer une donnée variable de sortie (S1, S2, S3) du dispositif de commande (2),
une entrée et une sortie d'un même automate ou de deux automates distincts étant internes lorsqu'elles sont propres à être interconnectées et à échanger une même donnée variable interne (I1, I2),
l'ensemble des données variables d'entrée (86, 88, 92, 94, 100, 102, 106, 108) et de sortie (90, 96, 98, 104, 110) des automates formant un vecteur d'état (114, 116, 118, 120, 122, 124, 126) du dispositif de commande (2),
**en ce que** le dispositif de commande (2) pour chaque processeur (4, 6, 8) comprend une mémoire de travail (22, 24, 26), comportant :
- un registre d'état de début d'exécution (112) de la séquence d'automates contenant les valeurs de l'ensemble des variables d'état (E1, E2, I1, I2, S1, S2, S3) avant l'exécution de la séquence d'automates,
- un registre d'état de fin d'exécution (113) de la séquence d'automates contenant les valeurs de l'ensemble des variables d'état du vecteur d'état obtenu après l'exécution de la séquence d'automates,
**en ce que**, pour chaque processeur (4, 6, 8), et pendant la durée d'exécution de la séquence (60, 70, 78), le processeur est propre à lire seulement dans le registre d'état de début (112) et à écrire seulement dans le registre d'état de fin (113),
en **en ce que** pour chaque processeur (4, 6, 8), le registre d'état de début de séquence (112) est apte à être écrit et rafraîchi seulement en fin d'exécution de la séquence par les valeurs des variables d'état contenu dans le registre de fin de séquence (113),
et **en ce que** chaque processeur (4, 6, 8) est apte à répéter l'exécution de la séquence d'automates jusqu'à ce que les valeurs des variables d'état d'au moins deux registres d'état (112, 113) associés sont identiques.

2. Dispositif de commande sécurisé à diversification (2) selon la revendication 1, **caractérisé en ce que** chaque séquenceur (54, 56, 58) est propre à activer et ordonner les automates d'application modulaire (46, 48, 50, 52) selon une séquence cyclique distincte (60, 70, 78) d'exécution des automates d'application (46, 48, 50, 52) ayant un cycle identique (62) et un début de cycle (64, 72) ou un sens de parcours (66, 82) différent.

3. Dispositif de commande sécurisé à diversification (2) selon la revendication 2, **caractérisé en ce que** chaque séquenceur (54, 56, 58) est propre à activer et ordonner les automates d'application modulaire (46, 48, 50, 52) selon une séquence cyclique distincte (60, 70, 78) d'exécution des automates d'application ayant un cycle (62) identique parcouru dans le même sens.

4. Dispositif de commande sécurisé à diversification (2) selon la revendication 1, **caractérisé en ce que** chaque séquenceur est propre à activer et à ordonner les automates d'application modulaire selon une séquence de séquenceur distincte formée d'une succession (224) de séquences partielles (234, 244, 254) d'automates d'application modulaire (198, 200, 202, 204, 206, 208, 210, 212, 214, 216) regroupés en sous-groupes (218, 220, 222) partitionnant l'ensemble des automates d'application modulaire du dispositif de commande (2).

5. Dispositif de commande sécurisé à diversification selon la revendication 4, **caractérisé en ce que** les sous-groupes d'automates (218, 220, 222) sont les mêmes pour tous les processeurs (4, 6, 8).

6. Dispositif de commande sécurisé à diversification (2) selon l'une quelconque des revendications 1 à 5, **caractérisé en ce que** chaque processeur (4, 6, 8) comprend une base de données programme (16, 18, 20) contenant un jeu d'instructions de processeur apte à être chargé dans le processeur (4, 6, 8) et à exécuter la séquence des automates d'application (46, 48, 50, 52) selon la séquence ordonnée par le séquenceur (54, 56, 58) associé au processeur.

7. Dispositif de commande sécurisé à diversification (2) selon la revendication 6, caractérisé en ce chaque base de données programme (16, 18, 20) contient un jeu d'instructions obtenu par un même compilateur.

8. Dispositif de commande sécurisé à diversification selon l'une quelconque des revendications 1 à 7, **caractérisé en ce que** l'organe de sélection de commande (34) est un organe de décision à vote majoritaire parmi les données de sorties (S(P1), S(P2), S(P3)) issues de tous les processeurs (4, 6, 8), l'organe (34) étant apte à comparer les données de sortie issues des sorties respectives de chaque processeur (4, 6, 8) et à transmettre les données de sorties communes majoritairement par rapport à l'ensemble des processeurs selon un critère de majorité prédéterminé.

9. Dispositif de commande sécurisé à diversification (2) selon la revendication 8, **caractérisé en ce que** l'organe de sélection de commande (34) est un organe de décision à l'unanimité.

10. Dispositif de commande sécurisé à diversification (2) selon l'une quelconque des revendications 1 à 9, **caractérisé en ce qu'**il est apte à commander un système de type sécurisé ferroviaire.

11. Procédé de commande sécurisé d'un système au moyen d'un dispositif selon l'une quelconque des revendications 1 à 11, comprenant les étapes consistant à :
- charger au moins les deux processeurs (4, 6, 8) à partir de bases de données programme (16, 18, 20) associées de jeux d'instructions différents,
- fournir des données d'entrée identiques (E) aux processeurs (4, 6, 8) agencés en parallèle en des entrées respectives (10, 12, 14),
- faire exécuter par chaque processeur (4, 6, 8) le jeu d'instructions lui étant associé pour calculer et délivrer, en des sorties respectives (28, 30, 32), des données de sorties (S(P1), S(P2), S(P3)) identiques en fonction des données d'entrée identiques, l'exécution d'un jeu d'instruction par un processeur (4,6,8) comprenant les étapes consistant à :
- exécuter au moins deux automates d'application modulaire (46, 48, 50, 52), les automates d'applications modulaire étant identiques pour chaque jeu d'instructions, selon une séquence propre, distincte des séquences des autres jeux d'instruction, le processeur étant propre, pendant la durée d'exécution de la séquence (60, 70, 78), à lire seulement dans un registre d'état de début (112) et à écrire seulement dans un registre d'état de fin (113), le registre d'état de début d'exécution (112) de la séquence d'automates contenant les valeurs de l'ensemble des variables d'état (E1, E2, I1, I2, S1, S2, S3) avant l'exécution de la séquence d'automates et le registre d'état de fin d'exécution (113) de la séquence d'automates contenant les valeurs de l'ensemble des variables d'état du vecteur d'état obtenu après l'exécution de la séquence d'automates,
- écrire et rafraichir le registre d'état de début de séquence (112) seulement en fin d'exécution de la séquence par les valeurs des variables d'état contenu dans le registre de fin de séquence (113),
- répéter l'exécution de la séquence d'automates jusqu'à ce que les valeurs des variables d'état d'au moins deux registres d'état (112, 113) associés sont identiques, les deux registres comprenant,
- délivrer (170, 180, 190) les données de sortie à l'organe de sélection de commande,
- sélectionner un signal de commande choisi parmi les données de sorties issues des processeurs (4, 6, 8), en fonction d'un critère déterminé,

12. Procédé de commande (143) sécurisée selon la revendication 11 **caractérisé en ce qu'**il comprend en outre les étapes consistant à :
- en fonction du critère de sélection valider, respectivement interdire la transmission de la commande issue de la pluralité de données de sorties reçues (S(P1), S(P2), S(P3)),
- en cas d'interdiction, signaler (196) l'existence d'une défaillance d'au moins un processeur (4,6,8).

## Patentansprüche

1. A diversity secured control device (2) for a system comprising:
- a set of at least two processors (4, 6, 8) for elaborating commands intended for the railway system, arranged in parallel to receive, on a respective input (10, 12, 14) identical input data, each processor (4, 6, 8) being capable of receiving different sets of instructions allowing calculating and delivering, on respective outputs (28, 30, 32), identical output data (S(P1), S(P2), S(P3)) in relation to the identical input data,
- a command selection component (34) provided with at least two inputs (36, 38, 40), each input (36, 38, 40) being connected to the output (28, 30, 32) of a processor (4, 6, 8) and a command output (42) capable, on the basis of a predetermined criterion, of delivering a command signal selected from the output data output by the processors (4, 6, 8),
each set of instructions associated with a processor (4, 6, 8) makes it possible to run at least two modular application automata (46, 48, 50, 52), the modular application automata (46, 48, 50, 52) being identical for all the sets of instructions, each set of instructions (16, 18, 20) associated with a processor (4, 6, 8) being capable of making a sequencer (54, 56, 58) for the subsequent activation of the modular application automaton (46, 48, 50, 52) according to an associated sequence (60, 70, 78), each sequencer (54, 56, 58) differing from the other sequencers (56, 58 ; 54, 58 ;54, 56), through its specific associated sequence (60, 70, 78), **characterised in that** each modular application automaton (46, 48, 50, 52) comprises automaton inputs and automaton outputs 90, 96, 98, 104,110),
an automaton input being external when it is capable of receiving a variable item of input data (E1, E2) from the control device (2),
an automaton output being external when it is capable of delivering a variable item of output data (S1, S2, S3) from the control vice (2),
an input and an output of the same automaton or of two different automata being internal when they are capable of being interconnected and exchanging a same variable internal item of data (I1, I2),
the set of variable input items of data (86, 88, 92, 94, 100, 102, 106, 108) and output data (90, 96, 98, 104, 110) of the automaton form a state vector for the control device (2),
**in that** the control device (2) for each processor (4, 6, 8) comprises a working memory (22, 24, 26) comprising:
- a state register (112) at the start of the running the sequence of automaton containing the values for the set of state variables (E12,E2, I1, I2, S1, S2, S3) before the sequence of automaton is run,
- a state register (113) at the end of the running the sequence of automaton containing the values of the set of state variables for the state vector obtained after the sequence of automaton has been run,
**In that**, for each processor (4, 6, 8), and during the time period of running of the sequence (60, 70, 78) the processor is capable of reading only in the state register (112) at the start and writing only in the state register (113) at the end,
**in that**, for each processor (4, 6, 8), the state register (112) at the start is being written and updated only at the end of the running of the sequence with the values of the state variables contained in the state register (113) at the end,
and **in that** each processor (4, 6, 8) is capable of repeating the running of the sequence of automaton until the values of the stat variables of at least two associated state registers (112, 113) are identical.

2. A diversity secured control device (2) according to claim 1, **characterised in that** each sequencer (54, 56, 58) is capable of activating and ordering the modular application automaton (46, 48, 50, 52) according to a different cyclical sequence (60, 70, 78) of running the application automaton (46, 48, 50, 52) having the same cycle (62) and a different cycle start (64, 72) or path direction (66, 68).

3. A diversity secured control device (2) according to claim 2, **characterised in that** each sequencer (54, 56, 58) is capable of activating and ordering the modular application automaton (46, 48, 50, 52) according to a different cyclical sequence (60, 70, 78) of running the application automaton having the same cycle (62) run in the same path direction.

4. A diversity secured control device (2) according to claim 1, **characterised in that** each sequencer is capable of activating and ordering the modular application automaton according to a distinct sequence made up of a succession (224) pf partial sequences (234, 244, 254) of the modular application automaton (198, 200, 202, 204, 206, 208, 210, 212, 214, 216) regrouped in sub-groups (218, 220, 222) partitioning the set the modular application automaton of the control device (2).

5. A diversity secured control device (2) according to claim 4, **characterised in that** the sub-groups (218, 220, 222) of modular application automaton are the same for the processors (4, 6, 8).

6. A diversity secured control device (2) according to any one of claims 1 to 5, **characterised in that** each processor (4, 6, 8) comprises a program database (16, 18, 20) containing a set of processor instructions capable of being loaded in the processor (4, 6, 8) and running the sequence of modular application automaton (46, 48, 50, 52) according to a sequence ordered by the sequencer (54, 56, 58) associated with the processor.

7. diversity secured control device (2) according to according to claim 6, **characterised in that** each program database (16, 18, 20) comprises a set of processor instructions obtained using a same compiler.

8. A diversity secured control device (2) according to according to any one of claims 1 to 7, **characterised in that** the command selection component (34) is a component reaching a decision on the basis of a majority vote from the output data (S(P1), S(P2), S(P3)) originating from all the processors (4, 6, 8), the component (34) being able to compare the output data originating from the respective outputs of each processor (4, 6, 8) and transmit the output data which are common on a majority basis relative to all the processors on the basis of a predetermined majority criterion.

9. A diversity secured control device (2) according to claim 8, **characterised in that** the command selection component (34) is a component reaching a decision on the basis of unanimity.

10. A diversity secured control device (2) according to according to any one of claims 1 to 9, **characterised in** the it is able to control a security railway system.

11. A secured control method by means of a diversity secured control device (2) according to according to any one of claims 1 to 10, comprising the steps of :
- loading at least two processors (4, 6, 8) from associated program databases (16, 18, 20) with different sets of instructions,
- providing identical input data (E) to respective inputs (10, 12, 14) of the processors (4, 6, 8) arranged in parallel,
- causing each processor (4, 6, 8) to run the set of instructions associated with it to compute and deliver, at the respective outputs (28, 30, 32), identical output data (8(P1), 8(P2), S(P3)) on the basis of identical input data, the running of a set of instructions by a processor (4, 6, 8) comprising the steps of:
- running at least two modular application automaton (46, 48, 50, 52), the modular application automaton being identical for each set of instructions, according to an own sequence, distinct from the sequences of the other sets of instructions, the processor being able, during the time period of running of the sequence (60, 70, 78), to read only in a state register at the start (112) and to write only in a state register at the end (113), the state register at the start (112) containing the values of all the state variables (E1, E2, I1, I2, S1, S2, 83) before the running of the sequence of modular application automaton and the state register at the end (113) containing the values of all the state variables obtained after the running of the sequence of modular application automaton,
- writing and updating the state register at the start (112)only at the end of the running of the sequence with the values of the state variables contained in the state register at the end (113),
- repeating the running of the sequence of modular application automaton until the values of the state variables of at least two associated state registers (112, 113) are identical,
- delivering (170, 180, 190) the output data to the command selection component,
- selecting a command signal chosen among the output data obtained from the processors (4, 6, 8), based on a determined criteria.

12. A secured control method (143) according to claim 11, **characterised in that** it further comprises the steps of :
- based on a selection criteria, validating, respectively prohibiting, the transmission of the command resulting from the plurality of output data (S(P1), 8(P2), S(P3)) received,
- in the event of prohibiting, signaling (196) the existence of a fault of at least one processor (4,6,8).

## Claims

1. Mit Diversifizierung gesicherte Steuervorrichtung (2) eines Systems, aufweisend:
- einen Satz von mindestens zwei Prozessoren (4, 6, 8) zum Verarbeiten von fur ein Eisenbahnsystem bestimmten Befehlen, welche Prozessoren parallelgeschaltet angeordnet sind, um über einen jeweiligen Eingang (10, 12, 14) identische Eingangsdaten zu erhalten, wobei jeder Prozessor (4, 6, 8) in der Lage ist, unterschiedliche Anweisungssätze zu erhalten, welche es ermöglichen, identische Ausgangsdaten (S(P1), S(P2), S(P3)) in Abhängigkeit von den identischen Eingangsdaten zu berechnen und an jeweiligen Ausgängen (28, 30, 32) zu liefern,
- ein Organ zur Befehlsauswahl (34), welches versehen ist mit mindestens zwei Eingängen (36, 38, 40), wobei jeder Eingang (36, 38, 40) mit dem Ausgang (28, 30, 32) eines Prozessors (4, 6, 8) verbunden ist, und mit einem Steuerausgang (42), welcher dazu geeignet ist, ein Steuersignal, welches aus den von den Prozessoren (4, 6, 8) stammenden Ausgangsdaten in Abhängigkeit von einem vorbestimmten Kriterium ausgewählt ist, auszugeben,
wobei jeder mit einem Prozessor (4, 6, 8) assoziierte Satz Anweisungen es ermöglicht, mindestens zwei Modulare-Anwendung-Automaten (46, 48, 50, 52) auszuführen, wobei die Modulare-Anwendung-Automaten (46, 48, 50, 52) fur alle Anweisungssätze identisch sind, wobei jeder mit einem Prozessor (4, 6, 8) assoziierte Satz Anweisungen (16, 18, 20) dazu geeignet ist, einen Sequenzer (54, 56, 58) zur sukzessiven Aktivierung der Modulare-Anwendung-Automaten (46, 48, 50, 52) gemäß einer zugehörigen Sequenz (60, 70, 78) zu bilden, wobei sich jeder Sequenzer (54, 56, 58) durch seine eigene zugehörige Sequenz (60, 70, 78) von den anderen Sequenzern (56, 58; 54, 58; 54, 56) unterscheidet,
**gekennzeichnet**
**dadurch, dass** jeder Modulare-Anwendung-Automat (46, 48, 50, 52) Automateneingänge und Automatenausgänge (90, 96, 98, 104, 110) aufweist,
ein Automateneingang extern ist, wenn er dazu geeignet ist, ein variables Eingangsdatum (E1, E2) der Steuervorrichtung (2) zu empfangen,
ein Automatenausgang extern ist, wenn er dazu geeignet ist, ein variables Ausgangsdatum (S1, S2, S3) der Steuervorrichtung (2) zu empfangen,
ein Eingang und ein Ausgang eines gleichen Automaten oder von zwei separaten Automaten interne sind, wenn sie dazu geeignet sind, miteinander verbunden zu sein und ein gleiches variables, internes Datum (I1, I2) auszutauschen,
der Satz von variablen Eingangs- (86, 88, 92, 94, 100, 102, 106, 108) und Ausgangsdaten (90, 96, 98, 104, 110) der Automaten einen Zustandsvektor (114, 116, 118, 120, 122, 124, 126) der Steuervorrichtung (2) bildet,
dadurch, dass die Steuervorrichtung (2) fur jeden Prozessor (4, 6, 8) einen Arbeitsspeicher (22, 24, 26) aufweist, welcher aufweist:
- ein Verzeichnis des Anfangszustands der Ausführung (112) der Automatensequenz, welches die Werte des Satzes von Zustandsvariablen (E1, E2, I1, I2, S1, S2, S3) vor der Ausführung der Automatensequenz aufweist,
- ein Verzeichnis des Endzustands der Ausführung (113) der Automatensequenz, welches die Werte des Satzes von Zustandsvariablen des nach der Ausführung der Automatensequenz erhaltenen Zustandsvektors aufweist,
dadurch, dass, fur jeden Prozessor (4, 6, 8) und während der Dauer der Ausführung der Sequenz (60, 70, 78), der Prozessor dazu geeignet ist, nur in dem Verzeichnis des Anfangszustands (112) zu lesen und nur in das Verzeichnis des Endzustands (113) zu schreiben,
dadurch, dass, fur jeden Prozessor (4, 6, 8), das Verzeichnis des Anfangszustands der Sequenz (112) dazu eingerichtet ist, nur am Ende der Ausführung der Sequenz durch die Werte der Zustandsvariablen, welche in dem Verzeichnis des Endzustands der Sequenz (113) enthalten sind, beschrieben zu werden und aktualisiert zu werden,
und dadurch, dass jeder Prozessor (4, 6, 8) dazu in der Lage ist, die Ausführung der Automatensequenz zu wiederholen, bis die Werte der Zustandsvariablen von mindestens zwei zugehörigen Zustandsverzeichnissen (112, 113) identisch sind.

2. Mit Diversifizierung gesicherte Steuervorrichtung (2) gemäß dem Anspruch 1, **gekennzeichnet dadurch, dass** jeder Sequenzer (54, 56, 58) dazu geeignet ist, die Modulare-Anwendung-Automaten (46, 48, 50, 52) gemäß einer zyklischen, gesonderten Sequenz (60, 70, 78) der Ausführung der Anwendung-Automaten (46, 48, 50, 52), welche einen identischen Zyklus (62) und einen unterschiedlichen Anfang des Zyklus (64,, 72) oder eine unterschiedliche Ablaufrichtung (66, 82) hat, zu aktivieren und anzuordnen.

3. Mit Diversifizierung gesicherte Steuervorrichtung (2) gemäß dem Anspruch 2, **gekennzeichnet dadurch, dass** jeder Sequenzer (54, 56, 58) dazu geeignet ist, die Modulare-Anwendung-Automaten (46, 48, 50, 52) gemäß einer zyklischen, gesonderten Sequenz (60, 70, 78) der Ausführung der Anwendung-Automaten (46, 48, 50, 52), welche einen identischen Zyklus (62), der in die gleiche Richtung abläuft, hat, zu aktivieren und anzuordnen.

4. Mit Diversifizierung gesicherte Steuervorrichtung (2) gemäß dem Anspruch 1, **gekennzeichnet dadurch, dass** jeder Sequenzer dazu geeignet ist, die Modulare-Anwendung-Automaten (46, 48, 50, 52) gemäß einer gesonderten Sequenzer-Sequenz, welche aus einer Folge (224) von Teilsequenzen (234, 244, 254) von Modulare-Anwendung-Automaten (198, 200, 202, 204, 206, 208, 210, 212, 214, 216), die in Untergruppen (218, 220, 222), welche den Satz von Modulare-Anwendung-Automaten der Steuervorrichtung (2) unterteilen, zusammengefasst sind, gebildet ist, zu aktivieren und anzuordnen.

5. Mit Diversifizierung gesicherte Steuervorrichtung (2) gemäß dem Anspruch 4, **gekennzeichnet dadurch, dass** die Untergruppen von Automaten (218, 220, 222) die gleichen fur jeden Prozessor (4, 6, 8) sind.

6. Mit Diversifizierung gesicherte Steuervorrichtung (2) gemäß irgendeinem der Ansprüche 1 bis 5, **gekennzeichnet dadurch, dass** jeder Prozessor (4, 6, 8) eine Programmdatenbank (16, 18, 20) aufweist, welche einen Satz Anweisungen des Prozessors beinhaltet, der in der Lage ist, in den Prozessor (4, 6, 8) geladen zu werden und die Sequenz der Anwendung-Automaten (46, 48, 50, 52) gemäß der mittels des mit dem Prozessor assoziierten Sequenzers (54, 56, 58) geordneten Sequenz auszuführen.

7. Mit Diversifizierung gesicherte Steuervorrichtung (2) gemäß dem Anspruch 6, **gekennzeichnet dadurch, dass** jede Programmdatenbank (16, 18, 20) einen durch einen gleichen Kompilierer erhaltenen Satz Anweisungen beinhaltet.

8. Mit Diversifizierung gesicherte Steuervorrichtung (2) gemäß irgendeinem der Ansprüche 1 bis 7, **gekennzeichnet dadurch, dass** das Organ zur Befehlsauswahl (34) ein Organ zur Entscheidung nach Mehrheitsvotum unter den von jedem der Prozessoren (4, 6, 8) stammenden Ausgangsdaten (S(P1), S(P2), S(P3)) ist, wobei das Organ (34) dazu in der Lage ist, die von den jeweiligen Ausgängen jedes Prozessors (4, 6, 8) stammenden Ausgangsdaten zu vergleichen und bezogen auf den Satz von Prozessoren gemäß einem vorbestimmten Mehrheitskriterium mehrheitlich gemeinsame Ausgangsdaten zu senden.

9. Mit Diversifizierung gesicherte Steuervorrichtung (2) gemäß Anspruch 8, **gekennzeichnet dadurch, dass** das Organ zur Befehlsauswahl (34) ein Organ zur Entscheidung nach Einstimmigkeitsprinzip ist.

10. Mit Diversifizierung gesicherte Steuervorrichtung (2) gemäß irgendeinem der Ansprüche 1 bis 9, **gekennzeichnet dadurch, dass** sie dazu in der Lage ist, ein gesichertes Eisenbahnsystem zu steuern.

11. Sicheres Verfahren zur Steuerung eines Systems mittels einer Vorrichtung gemäß irgendeinem der Ansprüche 1 bis 11, aufweisend die Schritte, welche bestehen aus:
- Laden mindestens der zwei Prozessoren (4, 6, 8) ausgehend von den mit den unterschiedlichen Anweisungssätzen assoziierten Programmdatenbanken,
- Liefern von identischen Eingangsdaten (E) an die Prozessoren (4, 6, 8), welche parallelgeschaltet angeordnet sind, über die jeweiligen Eingänge (10, 12, 14),
- Ausführen, durch jeden Prozessor (4, 6, 8), des Satzes Anweisungen, mit welchem er assoziiert ist, um identische Ausgangsdaten (S(P1), S(P2), S(P3)) in Abhängigkeit von den identischen Eingangsdaten zu berechnen und an den jeweiligen Ausgängen (28, 30, 32) zu liefern, wobei die Ausführung eines Satzes Anweisungen durch einen Prozessor (4, 6, 8) die Schritte aufweist, welche bestehen aus:
- Ausführen mindestens zweier Modulare-Anwendung-Automaten (46, 48, 50, 52), wobei die Modulare-Anwendung-Automaten identisch fur jeden Satz Anweisungen sind, gemäß einer eigenen Sequenz, welche von den Sequenzen anderer Anweisungssätze verschieden ist, wobei der Prozessor geeignet ist, um während der Dauer der Ausführung der Sequenz (60, 70, 78) nur in einem Verzeichnis des Anfangszustands (112) zu lesen und nur in das Verzeichnis des Endzustands (113) zu schreiben, wobei das Verzeichnis des Anfangszustands der Ausführung (112) der Automatensequenz die Werte des Satzes von Zustandsvariablen (E1, E2, I1, I2, S1, S2, S3) vor der Ausführung der Automatensequenz aufweist und das Verzeichnis des Endzustand der Ausführung (113) der Automatensequenz die Werte des Satzes von Zustandsvariablen des nach der Ausführung der Automatensequenz erhaltenen Zustandsvektors aufweist,
- Schreiben und Aktualisieren des Verzeichnis des Anfangszustands der Sequenz (112) nur am Ende der Ausführung der Sequenz durch die Werte der Zustandsvariablen, welche in dem Verzeichnis des Endzustands der Sequenz (113) enthalten sind,
- Wiederholen der Ausführung der Automatensequenz, bis die Werte der Zustandsvariablen von mindestens zwei zugehörigen Zustandsverzeichnissen (112, 113) identisch sind, die zwei Verzeichnisse aufweisend,
- Liefern (170, 180, 190) der Ausgangsdaten an das Organ zur Befehlsauswahl,
- Auswählen eines Steuersignals aus den von den Prozessoren (4, 6, 8) stammenden Ausgangsdaten in Abhängigkeit von einem vorbestimmten Kriterium.

12. Sicheres Steuerverfahren (143) gemäß dem Anspruch 11, **gekennzeichnet dadurch, dass** es ferner die Schritte aufweist, welche bestehen aus:
- in Abhängigkeit von dem Auswahlkriterium, Bestätigen bzw. Untersagen des Sendens des Befehls, welcher von der Mehrzahl der empfangenen Ausgangsdaten (S(P1), S(P2), S(P3)) stammt,
- im Fall des Untersagens, Signalisieren (196) des Vorhandenseins eines Fehlers von mindestens einem Prozessor (4, 6, 8).
